# EUROPÄISCHE PATENTSCHRIFT

(11) **EP 0 636 807 B1**
(45) Veröffentlichungstag und Bekanntmachung des Hinweises auf die Patenterteilung: **01.10.1997**
(21) Anmeldenummer: 94111256.7
(22) Anmeldetag: 19.07.1994
(51) Int. Cl.: F16D 65/04

(54) **Bremsbacke und Dämpfungsblech dafür**
Brake pad with dampening shim
Mâchoire de frein et cale d'amortissement

(30) Priorität: 26.07.1993 DE 4325066
(43) Veröffentlichungstag der Anmeldung: 01.02.1995
(73) Patentinhaber: Eagle-Picher Industries GmbH, D-74613 Öhringen (DE)
(72) Erfinder: Katz, Matthias, D-74172 Neckarsulm (DE); Beck, Friedrich, D-74613 Öhringen-Verrenberg (DE); Noack, Hans-Herbert, D-74639 Zweiflingen (DE)
(74) Vertreter: Lieck, Hans-Peter, Dipl.-Ing.

(56) Entgegenhaltungen:
- EP-A- 0 282 129
- EP-A- 0 373 333
- DE-A- 3 007 009
- DE-U- 8 525 203
- DE-U- 8 710 924
- GB-A- 2 053 390
- PATENT ABSTRACTS OF JAPAN vol. 8, no. 54 (M-282) (1491) 10. März 1984 & JP-A-58 207 535 (NISSAN) 3. Dezember 1983

## Beschreibung

Die Erfindung bezieht sich auf ein Dämpfungsblech für eine Bremsbacke, das zur Befestigung an einer Trägerplatte der Bremsbacke mindestens einen aus seiner Ebene vorstehenden und allseits von dem Dämpfungsblech umgebenden Vorsprung aufweist, der durch eine ge-wölbte Ausprägung des Dämpfungsbleches gebildet ist und in eine entsprechende Aussparung in der Trägerplatte eingreifen kann. Die Erfindung bezieht sich auch auf eine Bremsbacke mit einem solchen Dämpfungsblech.

Bei bekannten derartigen Dämpfungsblechen und Bremsbacken (z.B. DE-U-85 25 203) sind die Vorsprünge der Dämpfungsbleche durch noppen- oder napfförmige Auswölbungen des Dämpfungsbleches gebildet, die unterbrechungslos durchgehen. Die Auswölbung greift mit ihrer geraden oder konischen Wand an der Umlaufkante der Aussparung in der Trägerplatte an. Das hat einen hohen Verschleiß zur Folge. Gleichzeitig ist die Sicherheit gegenüber Verdrehungen zwischen dem Dämpfungsblech und der Trägerplatte unter den beim Bremsvorgang auftretenden Scherungskräften, insbesondere bei einer Konizität der Auswölbung, nicht sonderlich hoch.

Bei einer anderen bekannten Bremsbacke hat das Dämpfungsblech zu jeder Befestigungs-Aussparung in der Trägerplatte eine deckungsgleiche Aussparung. Als Befestigungs-Vorsprung steht am Rand der Aussparung ein Flansch weg, der durch eine seitliche Abbiegung oder Umbördelung des Dämpfungsbleches gebildet ist. Dabei kann der Flansch auch aus einzelnen, abgebogenen Laschen bestehen. Auch bei dieser Lösung ist die Sicherheit gegen Verdrehung begrenzt, weil die auftretenden Scherungskräfte immer mindestens teilweise in eine Richtung verlaufen, in der sie den Flansch zurückzubiegen suchen, in der der Flansch aber keine sonderliche Festigkeit hat.

Zur Erzielung hoher Verdrehsicherheit zwischen Trägerplatte und Dämpfungsblech schlägt die Erfindung ein Dämpfungsblech der eingangs genannten Art vor, bei dem gemäß Anspruch 1 jede gewölbte Ausprägung des Dämpfungsbleches von einem Schnitt im Dämpfungsblech begrenzt ist, dessen eine Schnittkante außerhalb der Ebene des Dämpfungsbleches verläuft. Bei einer auf demselben Erfindungsgedanken beruhenden Alternative gemäß Anspruch 2 ist die gewölbte Ausprägung des Dämpfungsbleches von zwei Schnitten im Dämpfungsblech begrenzt, deren eine Schnittkante jeweils außerhalb der Ebene des Dämpfungsbleches verläuft. Gegenstand der Erfindung ist ferner eine entsprechend ausgebildete Bremsbacke gemäß Anspruch 6.

Bei der erfindungsgemäßen Bremsbacke und dem erfindungsgemäßen Dämpfungsblech hat die der Befestigung dienende gewölbte Ausprägung ein oder zwei Schnittkanten, die dem Verlauf der Ausprägung außerhalb der Ebene des Dämpfungsbleches folgen, während die jeweils andere Schnittkante des zugehörigen Schnittes im wesentlichen in der Ebene des Dämpfungsbleches verbleibt. Die eine oder die beiden Schnittkante(n) der Ausprägung liegt bzw. liegen deshalb frei und kann bzw. können in der zugeordneten Befestigungs-Aussparung in der Trägerplatte mit der Seitenwand der Aussparung zusammenwirken bei der Übertragung der Scherungskräfte zwischen Dämpfungsblech und Trägerplatte. Da die Krafteinleitung in das Dämpfungsblech hierbei im wesentlichen in der Ebene des ausgewölbten Dämpfungsbleches erfolgt, können hohe Kräfte übertragen werden. Bei beiden Lösungen hat die gewölbte Ausprägung außerdem aufgrund ihrer Gestalt eine hohe Eigenfestigkeit, so daß sie unter den auftretenden Scherungskräften nicht verformt wird. Insgesamt ist dadurch eine sehr hohe Verdrehsicherheit erzielt. Gleichwohl ist die Lösung in der Fertigung einfach zu realisieren. Die Ausprägungen können z.B. beim Stanzen des Dämpfungsbleches durch einen Schneid-/Streckstempel im Stanzwerkzeug erzeugt werden.

Bei der Variante mit einem Schnitt hat die gewölbte Ausprägung eine muschelförmige Gestalt. Dabei ist ihre Eigenfestigkeit besonders hoch. Bei der Variante mit zwei Schnitten hat die Ausprägung die Gestalt eines gewölbten Steges. Dies hat den Vorteil, daß man sehr hohe Scherungskräfte nicht nur in einer Richtung, sondern auch in ihrer Gegenrichtung übertragen kann. Dabei wird man die Breite des Steges entsprechend der Höhe der auftretenden Scherungskräfte bemessen.

Ersichtlich ist die optimale Verdrehsicherheit bei der erfindungsgemäßen Lösung dann gegeben, wenn die Ausprägungen mit ihren Schnittkanten so ausgerichtet sind, daß die Schnittkante in etwa quer zur jeweiligen Richtung der hauptsächlichen Scherungskraft am Ort der Ausprägung verläuft. Hinsichtlich der Orientierung der Ausprägungen gibt es jedoch eine große Toleranz, da die Ausprägungen natürlich auch in anderen Richtungen zur Übertragung von, wenn auch geringeren Scherungskräften in der Lage sind. Wenn das Dämpfungsblech, wie es die Regel sein wird, mehrere Ausprägungen hat, z.B. zwei Ausprägungen, sind diese, bezogen auf ihre Schnittkanten, am besten in etwa senkrecht zueinander ausgerichtet. Sie ergänzen sich dann in ihrer Wirkung zur Aufnahme von Scherungskräften unterschiedlicher Richtung.

Um die Kraftübertragung zwischen Ausprägung und Befestigungs-Aussparung in der Trägerplatte optimal zu gestalten, sollte die Aussparung im Bereich der Schnittkante(n) der Ausprägung die gleiche Kontur wie diese haben. Die einfachste Kontur ergibt sich, wenn die Schnittkante(n) der Ausprägung geradlinig ist bzw. sind. Zwingend ist dies jedoch nicht. Im Prinzip können die Schnitte bzw. die Schnittkanten auch andere Formen haben, z. B. gewellt oder bogenförmig gekrümmt sein. Bei der Lösung, bei der die Ausprägung zwei Schnittkanten hat, verlaufen diese vorzugsweise parallel. Wenn sie dann außerdem geradlinig sind, ergibt sich hierbei die bevorzugte Ausführungsform der stegförmigen Ausprägung zum Zusammenwirken mit einer Aussparung in der Trägerplatte von rechteckiger Kontur.

Die mit dem Dämpfungsblech angestrebte Geräuschisolierung kann auf einer Schwingungsisolierung beruhen. Dann wird man eine "schwimmende" Befestigung des Dämpfungsbleches an der Trägerplatte wählen, bei welcher jede Ausprägung mit einer Passung in ihre Befestigungs-Aussparung eingreift, die ein begrenztes Bewegungsspiel des Dämpfungsbleches zuläßt. Alternativ kann die Ausprägung - im Sinne einer Masseerhöhung - auch passgenau in die Aussparung eingreifen.

In der Trägerplatte können besondere Befestigungs-Aussparungen für die Aufnahme der Ausprägungen des Dämpfungsbleches vorgesehen sein. Besondere Aussparungen werden nicht benötigt, wenn die Trägerplatte mindestens eine Verankerungsaussparung für den Bremsbelag aufweist, die mit Bremsbelagmaterial ausgefüllt ist, und wenn die Aussparung für die Aufnahme einer Ausprägung des Dämpfungsbleches mindestens teilweise in dem Bremsbelagmaterial ausgebildet ist, das sich in der Verankerungsaussparung befindet. Bei einer bevorzugten Ausgestaltung dieser Lösung, insbesondere in Verbindung mit einer stegförmigen Ausprägung, setzt sich die z.B. nutenförmige Aussparung im Reibbelagmaterial an beiden Enden in der eigentlichen Trägerplatte noch ein Stück fort, so daß die Ausprägung sowohl mit dem Reibbelagmaterial wie auch der eigentlichen Trägerplatte zusammenwirkt.

Im folgenden ist die Erfindung mit weiteren vorteilhaften Einzelheiten anhand zweier schematisch dargestellter Ausführungsbeispiele näher erläutert.

Es zeigen:
- Figur 1: den Schnitt durch eine Bremsbacke nach der Linie 1-1 in Figur 2,
- Figur 2: eine Draufsicht auf das Dämpfungsblech der Bremsbacke nach Figur 1,
- Figur 3: eine Stirnansicht des Dämpfungsbleches nach Figur 2,
- Figur 4: die Draufsicht auf ein anderes Dämpfungsblech.

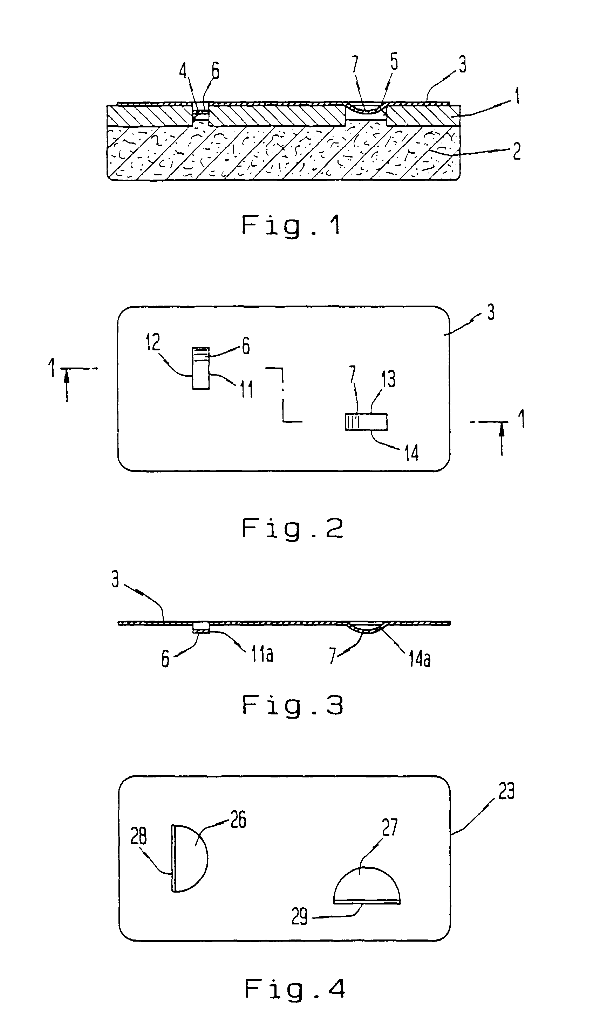

Die in Figur 1 gezeigte Bremsbacke besteht aus einer Trägerplatte 1, die auf ihrer einen Seite einen Bremsbelag 2 trägt. Auf der gegenüberliegenden Seite ist ein Dämpfungsblech 3 vorgesehen, das mit der Trägerplatte 1 flächig durch Klebung verbunden ist. Die Trägerplatte 1 hat zwei Aussparungen 4 und 5, die der Verankerung des Bremsbelages 2 dienen, indem das Bremsbelagmaterial in die Aussparungen 4 und 5 hineingepreßt ist. Die Aussparungen 4 dienen gleichzeitig der zusätzlichen Befestigung des Dämpfungsbleches 3 an der Trägerplatte 1 in dem Sinne, daß sich Trägerplatte und Dämpfungsblech unter den beim Bremsvorgang auftretenden Scherungskräften nicht gegenseitig verdrehen können.

Hierzu besitzt das Dämpfungsblech 3, vergleiche Figur 2 und 3, zwei aus seiner Ebene vorstehende Vorsprünge in Form gewölbter, stegförmiger Ausprägungen 6 und 7, die auf dem Dämpfungsblech so angeordnet sind, daß sie mit den Aussparungen 4 und 5 korrespondieren und in diese eingreifen.

Die Ausprägung 6 ist allseits von dem eigentlichen Dämpfungsblech umgeben und durch zwei parallele geradlinige Schnitte 11 und 12 im Dämpfungsblech begrenzt, wobei jeweils die eine Schnittkante, vergleiche die Schnittkante 11a in Figur 3, der Wölbung der Ausprägung folgt und deshalb außerhalb der Ebene des Dämpfungsbleches verläuft, während die jeweils andere Schnittkante jedes Schnittes 11 bzw. 12 in der Ebene des Dämpfungsbleches liegt. Dadurch erhält die Ausprägung die Gestalt eines sich über das Dämpfungsblech erhebenden Steges von rechteckiger Kontur.

Die Ausprägung 7 ist analog zur Ausprägung 6 gestaltet, jedoch verlaufen ihre Schnitte 13 und 14 bzw. die entsprechenden Schnittkanten im Dämpfungsblech quer zur Richtung der Schnitte 11 und 12 der anderen Ausprägung 6.

Beide Aussparungen 4 und 5 in der Trägerplatte haben, wie die zugeordneten Ausprägungen jeweils eine rechteckige, der Ausprägung entsprechende Kontur. Die Abmessungen sind für ein geringes gegenseitiges Bewegungsspiel gewählt.

Figur 4 zeigt ein anderes Dämpfungsblech 23 mit zwei muschelförmigen, gewölbten Ausprägungen 26 und 27, die jeweils von einem geradlinigen Schnitt 28 bzw. 29 im Dämpfungsblech begrenzt sind. Wiederum folgt dabei die eine Schnittkante der Schnitte dem Verlauf der Ausprägung, während die andere Schnittkante in der Ebene des Dämpfungsbleches liegt.

Die Dämpfungsbleche bestehen typischerweise aus gummibeschichtetem Federstahlblech mit einer Gesamtdicke von beispielsweise 0,8 mm, wovon das eigentliche Blech etwa knapp die Hälfte ausmacht. Die Ausprägungen mit ihrem Schnitt oder ihren Schnitten lassen sich in einfacher Weise in einem einzigen Vorgang mittels eines Schneid/Streckstempels im Stanzwerkzeug erzeugen. Die Trägerplatte besteht aus Stahl und hat zum Beispiel eine Dicke von 12 mm.

## Patentansprüche

1. Dämpfungsblech (3) für eine Bremsbacke, das zur Befestigung an einer Trägerplatte (1) der Bremsbacke mindestens einen aus seiner Ebene vorstehenden und allseits von dem Dämpfungsblech (3) umgebenen Vorsprung aufweist, der durch eine gewölbte Ausprägung (6, 7; 26, 27) des Dämpfungsblechs (3) gebildet ist und in eine entsprechende Aussparung (4,5) in der Trägerplatte (1) eingreifen kann,
dadurch gekennzeichnet,
daß die gewölbte Ausprägung (26, 27) von einem Schnitt (28, 29) im Dämpfungsblech (23) begrenzt ist, dessen eine Schnittkante außerhalb der Ebene des Dämpfungsbleches (23) verläuft.

2. Dämpfungsblech (3) nach dem Oberbegriff des Anspruches 1, dadurch gekennzeichnet,
daß die gewölbte Ausprägung (6, 7) von zwei Schnitten (11, 12, 13, 14) im Dämpfungsblech (3) begrenzt ist, deren eine Schnittkante (z.B. 11a) jeweils außerhalb der Ebene des Dämpfungsbleches (3) verläuft.

3. Dämpfungsblech nach Anspruch 1 oder 2,
dadurch gekennzeichnet,
daß die Schnittkante(n) der Ausprägung geradlinig ist bzw. sind.

4. Dämpfungsblech nach Anspruch 2 oder nach Anspruch 3 und 2,
dadurch gekennzeichnet,
daß die beiden Schnittkanten der Ausprägung parallel sind.

5. Dämpfungsblech nach einem der Ansprüche 1 bis 4,
dadurch gekennzeichnet,
daß mindestens zwei Ausprägungen vorhanden sind, die, bezogen auf ihre Schnittkanten, in etwa senkrecht zueinander ausgerichtet sind.

6. Bremsbacke mit einer Trägerplatte (1), mit einem Bremsbelag (2) auf einer Seite der Trägerplatte (1) und mit einem Dämpfungsblech (3) nach einem der vorhergehenden Ansprüche 1 bis 5 auf der anderen Seite der Trägerplatte (1).

7. Bremsbacke nach Anspruch 6,
dadurch gekennzeichnet,
daß die Aussparung im Bereich der Schnittkante(n) der Ausprägung die gleiche Kontur wie diese hat.

8. Bremsbacke nach Anspruch 6 oder 7
dadurch gekennzeichnet,
daß die Aussparung rechteckig ist.

9. Bremsbacke nach einem der Ansprüche 6 bis 8,
dadurch gekennzeichnet,
daß die Ausprägung paßgenau in die Aussparung eingreift.

10. Bremsbacke nach einem der Ansprüche 6 bis 8,
dadurch gekennzeichnet,
daß die Ausprägung mit einer Passung in die Aussparung eingreift, die ein begrenztes Bewegungsspiel des Dämpfungsbleches zuläßt.

11. Bremsbacke nach einem der Ansprüche 6 bis 10,
dadurch gekennzeichnet,
daß die Ausprägung mit ihrer bzw. ihren Schnittkante(n) quer zur Richtung der hauptsächlichen Scherungskraft zwischen Dämpfungsblech und Trägerplatte ausgerichtet ist.

12. Bremsbacke nach einem der Ansprüche 6 bis 11,
dadurch gekennzeichnet,
daß die Trägerplatte mindestens eine Verankerungsaussparung für den Bremsbelag aufweist, die mit Bremsbelagmaterial ausgefüllt ist, und daß die Aussparung für die Aufnahme einer Ausprägung des Dämpfungsbleches mindestens teilweise in dem Bremsbelagmaterial ausgebildet ist, das sich in der Verankerungsaussparung befindet.

## Claims

1. A dampening sheet (3) for a brake pad, which dampening sheet includes at least one projection for fastening to a backplate (1) of the brake pad, said projection protruding from the plane of the dampening sheet, being totally surrounded by the dampening sheet (3) and formed by a domed embossment (6, 7; 26, 27) of the dampening sheet (3) and adapted to engage in a corresponding recess (4, 5) in the backplate (1), **characterized** in that the domed embossment (26, 27) is defined by a cut (28, 29) in the dampening sheet (23) having one cutting edge extend outside of the plane of the dampening sheet (23).

2. The dampening sheet (3) as defined in the preamble of claim 1, characterized in that the domed embossment (6, 7) is defined by two cuts (11, 12, 13, 14) in the dampening sheet (3), each having one cutting edge (e.g. 11a) extend outside of the plane of the dampening sheet (3).

3. The dampening sheet as claimed in claim 1 or 2, characterized in that the cutting edge(s) of the embossment is/are rectilinear.

4. The dampening sheet as claimed in claim 2 or claims 3 and 2, characterized in that the two cutting edges of the embossment are parallel to each other.

5. The dampening sheet as claimed in any one of claims 1 to 4, characterized in that at least two embossments are provided which are oriented approximately vertically with respect to each other, based on their cutting edges.

6. A brake pad comprising a backplate (1) with a friction lining (2) at one side of the backplate and a dampening sheet (3) according to any one of the preceding claims 1 to 5 at the other side of the backplate (1).

7. The brake pad as claimed in claim 6, characterized in that, in the area of the cutting edge(s) of the embossment, the recess has the same contour as the cutting edges.

8. The brake pad as claimed in claim 6 or 7, characterized in that the recess is rectangular.

9. The brake pad as claimed in any one of claims 6 to 8, characterized in that the embossment is closely fitted in the recess.

10. The brake pad as claimed in any one of claims 6 to 8, characterized in that the embossment is fitted with such tolerance in the recess as to permit limited clearance of motion of the dampening sheet.

11. The brake pad as claimed in any one of claims 6 to 10, characterized in that the embossment has its cutting edge(s) oriented transversely of the direction of the principal shearing force between the dampening sheet and the backplate.

12. The brake pad as claimed in any one of claims 6 to 11, characterized in that the backplate has at least one anchoring aperture for the friction lining which aperture is filled with friction lining material, and in that the recess provided to receive an embossment of the dampening sheet is formed at least partly in the friction lining material which is located in the anchoring aperture.

## Revendications

1. Tôle d'amortissement (3) pour une mâchoire de frein, qui présente, en vue de la fixation d'une plaque de support (1) de la mâchoire de frein, au moins une saillie qui est entourée de toute part par la tôle d'amortissement (3), qui fait saillie de son plan, qui est constituée par une empreinte bombée (6,7, 26,27) de la tôle d'amortissement (3) et qui peut s'engager dans un évidement correspondant (4, 5) ménagé dans la plaque de support (1),
caractérisée en ce que
l'empreinte bombée (26, 27) est délimitée, dans la tôle d'amortissement (23) par deux coupes (28, 29) dont un bord de coupe s'étend respectivement à l'extérieur de la tôle d'amortissement (23).

2. Tôle d'amortissement (3) selon le préambule de la revendication 1, caractérisée en ce que l'empreinte bombée (6, 7) est délimitée, dans la tôle d'amortissement (3), par deux coupes (11, 12, 13, 14)dont un bord de coupe (par exemple 11a) s'étend respectivement à l'extérieur du plan de la tôle d'amortissement (3).

3. Tôle d'amortissement selon la revendication 1 ou 2,
caractérisée en ce que
le(s) bord(s) de coupe de l'empreinte est respectivement sont rectilignes.

4. Tôle d'amortissement selon la revendication 2 ou selon les revendications 3 et 2,
caractérisée en ce que
les deux bords de coupe de l'empreinte sont parallèles.

5. Tôle d'amortissement selon l'une des revendications 1 à 4,
caractérisée en ce que
au moins deux empreintes sont prévues qui, par rapport à leurs bords de coupe, sont orientées approximativement perpendiculairement l'une par rapport à l'autre.

6. Mâchoire de frein munie d'une plaque de support (1), comprenant une garniture de frein (2) sur l'une des faces de la plaque de support (1) et une tôle d'amortissement (3), selon l'une des revendications précédentes 1 à 5, sur l'autre face de la plaque de support (1).

7. Mâchoire de frein selon la revendication 6,
caractérisée en ce que
l'évidement présente le même contour que celui de l'empreinte dans la zone du/des bord(s) de coupe de l'empreinte.

8. Mâchoire de frein selon la revendication 6 ou 7,
caractérisée en ce que
l'évidement est rectangulaire.

9. Mâchoire de frein selon l'une des revendication 6 à 8
caractérisée en ce que
l'empreinte s'engage de manière exactement ajustée dans l'évidement.

10. Mâchoire de frein selon l'une des revendication 6 à 8
caractérisée en ce que
l'empreinte s'engage dans l'évidement par un ajustement qui permet un jeu de mouvement limité de la tôle d'amortissement.

11. Mâchoire de frein selon l'une des revendications 6 à 10,
caractérisée en ce que
l'empreinte est orientée, par son respectivement ses bords de coupe, transversalement à la direction de la force de cisaillement principale entre la tôle d'amortissement et la plaque de support.

12. Mâchoire de frein selon l'une des revendications 6 à 11,
caractérisée en ce que
la plaque de support présente au moins un évidement d'ancrage pour la garniture de frein, qui est rempli de matériau de garniture de frein et en ce que l'évidement pour le logement d'une empreinte de la tôle d'amortissement est pratiqué au moins partiellement dans le matériau de garniture de frein qui se trouve dans l'évidement d'ancrage.
